# EUROPEAN PATENT SPECIFICATION

(11) **EP 0 386 744 B1**
(45) Date of publication and mention of the grant of the patent: **27.10.1993**
(21) Application number: 90104374.5
(22) Date of filing: 07.03.1990
(51) Int. Cl.: B27B 5/34, B23B 31/14, B23B 31/40, F16D 1/08, F16D 43/04

(54) **Sawing machine**
Sägemaschine
Machine de sciage

(30) Priority: 07.03.1989 JP 55397/89
(43) Date of publication of application: 12.09.1990
(73) Proprietor: TAIHEI MACHINERY WORKS, LTD., Komaki-shi, Aichi (JP)
(72) Inventor: Otani, Kazuhiro, Matsubara-shi, Osaka (JP); Hiraga, Tetsuo, Matsubara-shi, Osaka (JP); Bai, Tetsuji, Izumi-shi, Osaka (JP); Iguchi, Osamu, Suminoe-ku, Osaka (JP); Tanisaka, Tadao, Suminoe-ku, Osaka (JP); Tsuji, Junji, Sakai-shi, Osaka (JP)
(74) Representative: Glawe, Delfs, Moll & Partner

(56) References cited:
- DE-A- 1 921 708
- DE-A- 3 302 386
- DE-C- 525 355
- DE-C- 739 558
- GB-A- 283 380
- GB-A- 870 927
- US-A- 3 073 198
- US-A- 3 202 189
- US-A- 3 703 915
- US-A- 4 213 621
- US-A- 4 414 875
- PATENT ABSTRACTS OF JAPAN, vol. 11, no. 44 (M-560)[2491], 10th February 1987;& JP-A-61 206 825 (YASUYUKI KAWAMORITA) 13-09-1986

## Description

The present invention relates to a sawing machine as mentioned in the pre-characterizing part of claim 1, having a plurality of saws to cut a material into a plurality of parts.

Usually, in prior art sawing machine a plurality of circular saws are fitted on a spindle with interposed cylindrical positioning spacers, and the circular saws are fixed in position by tightening nuts. In order to change the cutting width of a material, it was necessary to stop the operation of the machine, to loosen the nuts and to dismount the spacers and the circular saws from the spindle. Spacers for cutting a material to desired widths are then selected, the circular saws are fitted on the spindle together with the spacers, and finally they are tightened by nuts. Such work is not only extremely troublesome but also lowers the operation rate because of a long downtime of the machine for changing spacers. Also, such a prior art machine requires many spacers having different sizes and thus selection of desired spacers and their maintenance were troublesome.

US-A-4 414 875 discloses a sawing machine of the above mentioned kind, wherein the position of the circular saws along the spindle, where they are fixed axially, is determinated by shifter-rods. In this case, also there is no need to loosen nuts or to dismount spacers in order to change the cutting width, it will become troublesome to handle that sawing machine if a large number of circular saws is used.

It is an object of this invention to provide a sawing machine which permits easy and quick adjustment of the distances between the circular saws and which obviates the above said shortcomings.

To change the cutting width, each circular saw is moved along the spindle with the spindle in rotation or at a stop until a desired distance is attained.

After moving each circular saw to a desired position, the spindle is driven at a high speed by a motor. This will rotate the circular saws at a high speed together with the spindle. At the same time, the movable joint member which is rotating together with them will move outwardly by a centrifugal force, locking the spindle and the circular saws together.

With the structure claimed in claim 2, by rotating the spindle at a high speed together with the circular saws after adjusting the distances between the adjacent circular saws, the movable joint member will take such a position as to couple the circular saws and the spindle together.

With the structure claimed in claim 3, when the spindle begins to rotate at a high speed after adjusting the position of the circular saws, a portion of the pivotable movable member will be pressed against the spindle, thus coupling the spindle and the circular saws together.

With the structure claimed in claim 4, each circular saw is positioned while the spindle is at a stop and the one-way clutch is loose. Then the spindle is driven to lock the circular saws to the spindle by means of the one-way clutch. Thus the spindle and the circular saws rotate in unison.

With the structure claimed in claim 5, when the spindle is rotated at a high speed after adjusting the position of the circular saws, the movable joint members will protrude into the hollow annular bodies thus increasing the fluid pressure therein.

Owing to this fluid pressure, the inner peripheral wall will be deformed elastically, thus coupling the annular saws and the spindle together.

According to the present invention, since a plurality of circular saws adapted to rotate together with the spindle is axially slidable with respect to the spindle, the distances between the adjacent circular saws can be adjusted very easily.

Also, by the provision of the movable joint member mounted between the spindle and the circular saws and adapted to be actuated by the centrifugal force to join the spindle and the circular saws together, they can be joined together automatically by turning the spindle after adjusting the distances between the adjacent circular saws. This eliminates the necessity of fixing the circular saws to the spindle and thus greatly improves the efficiency of cutting of the material.

With the structure having a one-way clutch, the distances between the circular saws can be freely adjusted while the spindle is at rest because the clutch is loose. When the spindle starts rotating, the one-way clutch is coupled, coupling the circular saws to the spindle. Thus the same effect as with the structure having the movable joint member is obtained.

Further, with the structure having a liquid-filled hollow annular member provided on the inner peripheral surface of the circular saws and a movable joint member mounted on the inner peripheral surface of the hollow annular member so that the movable joint member will be pressed against the spindle when the fluid pressure in the hollow annular member rises at its outer peripheral portion owing to the rotation of the circular saws, thus coupling the circular saws and the spindle together, the movable joint member is actuated by the rise in fluid pressure owing to a centrifugal force. Thus the coupling and uncoupling between the spindle and the circular saws are very smooth.

Other features and objects of the present invention will become apparent from the following description taken with reference to the accompanying drawings, in which:
Fig. 1 is a front view, partially in sections of the first embodiment of the present invention;
Fig. 2 is a vertical sectional view of a portion of the same;
Fig. 3 is an enlarged partially cutaway vertical sectional view of a portion of the same;
Fig. 4 is a partially cutaway vertical sectional view of the third embodiment;
Figs. 5-I and 5-II are partially cutaway vertical sectional views of the same showing its different conditions;
Fig. 6 is a partially cutaway cross-sectional front view of the same;
Figs. 7-I and 7-II are partially cutaway vertical sectional view of the fourth embodiment showing its different conditions;
Fig. 8 is a similar view of the fifth embodiment;
Fig. 9 is a partially cutaway top plan view of the same;
Fig. 10 is an exploded perspective view of a portion of the same;
Figs. 11-I and 11-II are enlarged vertical sectional views of portions of the same showing how it operates;
Figs. 12-I and 12-II are partially cutaway vertical sectional front views of the sixth embodiment showing its different conditions;
Figs. 13-I and 13-II are similar views of the seventh embodiment showing its different conditions;
Fig. 14 is a vertical sectional view of the ninth embodiment;
Fig. 15 is a partially cutaway vertical sectional front view of the same;
Fig. 16 is a vertical sectional side view of the tenth embodiment;
Fig. 17 is a partially cutaway vertical sectional front view of the same;
Fig. 18 is a vertical sectional side view of the eleventh embodiment;
Fig. 19 is a vertical sectional side view of the twelfth embodiment; and
Fig. 20 is an enlarged vertical sectional front view of a portion of the same.

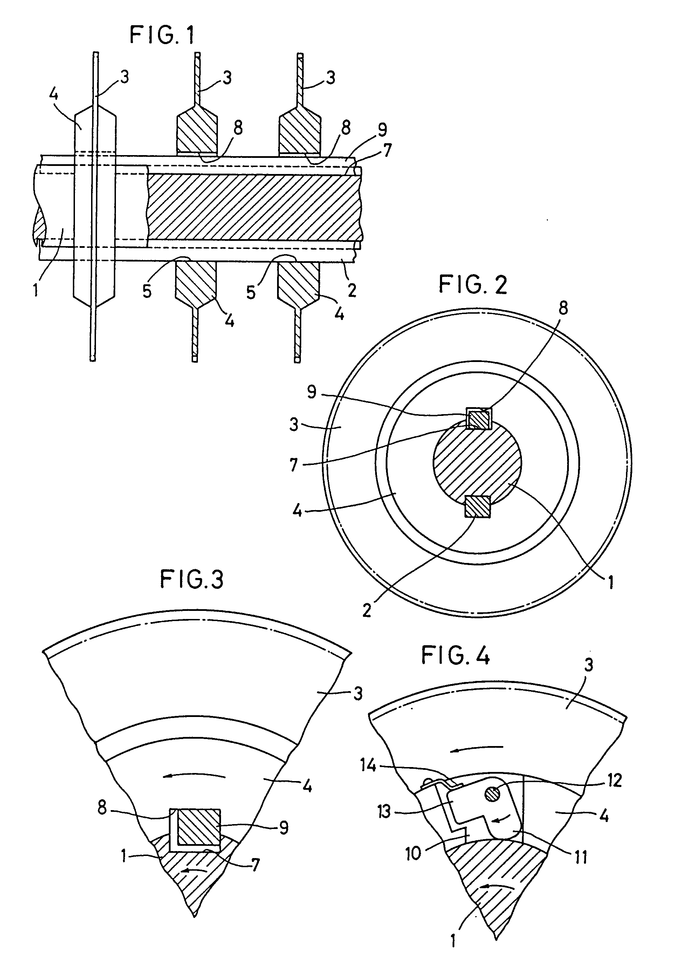

In the first embodiment shown in Figs. 1 to 3, numeral 1 designates a spindle of a sawing machine (not shown). A key 2 is fixedly mounted on the outer periphery thereof.

Numeral 3 designates a plurality of circular saws having their middle portion thickened to form a boss 4. The key 2 is engaged in a key groove 5 formed in the inner periphery of the boss 4 so that the circular saws 3 will rotate together with the spindle 1 and be axially slidable.

The spindle 1 is formed with another groove 7 while the boss 4 is formed in its inner periphery with a groove 8 opposite to the groove 7.

In Figs. 1 to 3, numeral 9 designates a movable joint member in the form of a square pole. It is inserted into the space defined by the grooves 7 and 8 with a suitable clearance.

While the spindle 1 is rotating at a low speed or at a stop, the movable joint member 9 is received loosely in the grooves 7 and 8.

With this arrangement, each circular saw 3 can freely move along the key 2. Thus the distance between any adjacent circular saws 3 can be changed easily.

After adjusting the distances between the adjacent circular saws 3, when the spindle 1 is rotated in the direction of arrow in Fig. 3, the movable joint member 9 held between the grooves 7 and 8 will be moved outwardly by centrifugal force, and pressed against the bottom of the groove 8. Thus the spindle 1 and the circular saws 3 are coupled together.

Though in the above embodiment, the key 2 is used, it may be omitted, because the circular saws 3 and the spindle 1 can be rotated together with each other only by use of the movable joint member 9.

In the second embodiment shown in Fig. 4, the boss 4 of each circular saw 3 is formed in one side thereof with a recess 10 in which a cam-shaped movable joint member 11 is received so as to be pivotable about a pin 12.

In this embodiment, in order that a turning torque acts on the members 11 when subjected to a centrifugal force, a weight 13 is provided at one side of each member 11 and further a spring 14 for biasing the weight 13 is provided. With this arrangement, while the spindle 1 is rotating at a low speed or at a stop, the members 11 are kept apart from the outer periphery of the spindle 1.

In this embodiment, the distances between the circular saws 3 can be freely changed while the spindle 1 is rotating at a low speed or at a stop.

After adjusting the distances between the circular saws 3, by turning the spindle 1 in the direction of arrow in Fig. 4, the members 11 will pivot in the direction of arrow against the biasing force of the springs 14 under the centrifugal force acting on the weights 13. Thus the spindle 1 and the circular saws 3 are coupled together so as to rotate together.

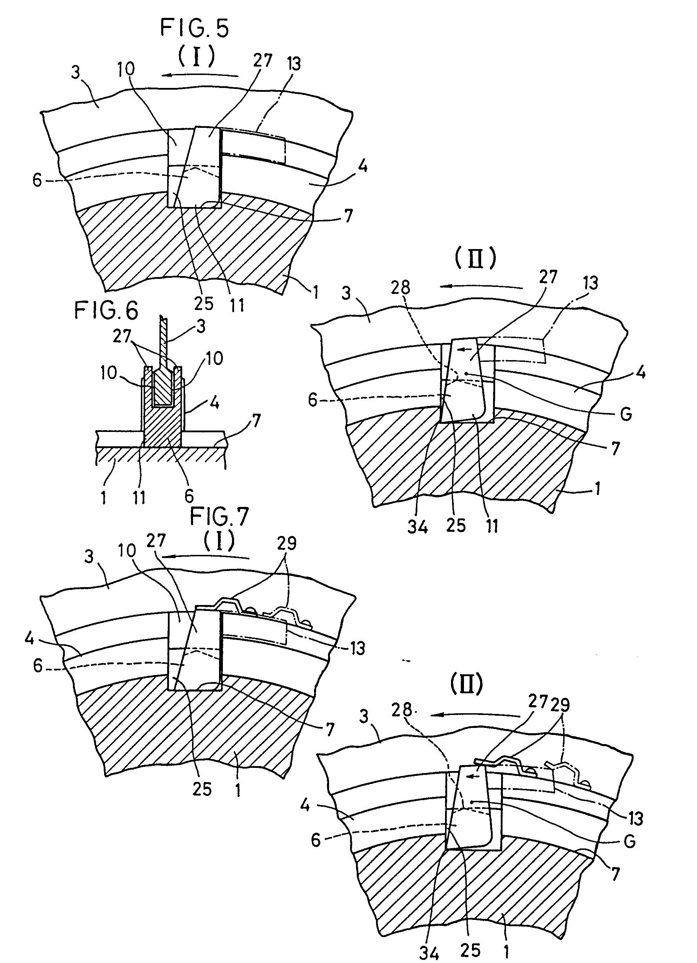

Figs. 5-I, 5-II and 6 show the third embodiment.

This embodiment is the same as the second embodiment in that a movable joint member 11 is received in a recess 10 formed in the side face of the boss 4 of each circular saw 3. But in this embodiment shown in Fig. 3, no pin is used.

Namely, in this embodiment, recesses 10 are formed in the boss 4 of each circular saw 3 at both sides thereof. Each boss 4 has its inner periphery recessed to form a housing portion 25 at a portion where the recesses 10 are formed.

Each member 11 has a thick-walled portion 6 and pieces 27 at both sides thereof so that it has a U-shaped section. It is mounted on the spindle 1 with its thick-walled portion 6 received in the housing portion 25 and the pieces 27 received in the recesses 10 at both sides of the portion 25.

A protrusion 28 is provided outside the thick-walled portion 6. Also, by providing a weight 13 as shown by chain line, the certrifugal force can be increased. But this weight 13 may be omitted.

Supposing that the members 11 have their center of gravity at point G shown in Fig. 5-II, when they are rotated at a high speed together with the spindle 1, they will pivot about their respective corners 34 in the direction of arrow in Fig. 5-II by the action of a centrifugal force so that their outer protrusions 28 are pressed against the inner surface of the housing portions 25. Thus the spindle 1 and the circular saws 3 are coupled together.

While the spindle 1 is rotating at a low speed or at a stop, no centrifugal force acts on the members 11.

Thus, the outer protrusions 28 on the thick-walled portions 6 are kept apart from the inner surface of the housing portions 25, so that the position of the circular saws 3 can be changed freely.

Figs. 7-I and 7-II show the fourth embodiment in which springs 29 are provided in contact with the pieces 27. In this embodiment, while the spindle 1 is at a stop, the movable joint members 11 have their bottom surface in contact with the outer peripheral surface of the spindle 1 owing to its own weight. Thus the movement of the circular saws 3 gets heavy

While the spindle 1 is rotating at a low speed, the outer protrusion 28 on the thick-walled portion 6 of each member 11 will come into contact with-the inner surface of the housing portions 25 by a small centrifugal force. Thus the circular saws 3 will get heavy. But in this embodiment, the springs 29 serve to lower the centrifugal force so as to keep the protrusions 28 afloat over the inner surface of the housing portions 25. Thus the circular saws 3 can be moved easily.

Otherwise, this embodiment is the same as the third embodiment shown in Figs. 5 and 6.

Also, in this state, since the centers of gravity of the members 11 remain at G in Fig. 7-II, when the spindle rotates at a high speed, the centrifugal force acting on the members 11 will overcome the biasing force of the springs 29, pivoting the members 11 about their respective corners 34 in the direction of arrow in Fig. 7-II. Thus the outer protrusions 28 are pressed against the inner surface of the housing portions 25, so that the spindle 1 and the circular saws 3 are coupled together.

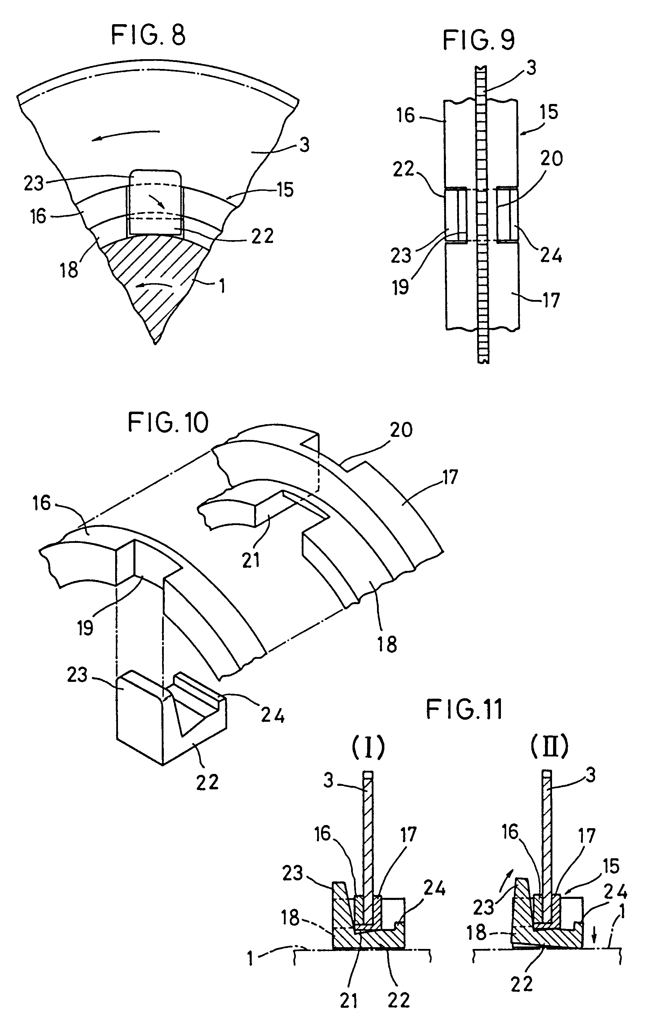

Figs. 8 to 11 show the fifth embodiment.

In this embodiment, as shown in Fig. 10, each boss 15 comprises right and left ring-shaped members 16 and 17. A circular saw 3 is sandwiched between the members 16 and 17 so that a cylindrical portion 18 formed on one side of the inner peripheral surface of the member 17 is inserted in a center bore formed in the circular saw 3 and in the ring-shaped member 16 as shown in Figs. 11-I and 11-II. The cylindrical portion 18 is then secured to the circular saw 3 by bolts or rivets.

The members 16 and 17 are formed in their respective outer surfaces with recesses 19 and 20 whereas the cylindrical portion 18 is formed in its inner periphery with an axial groove 21 so as to correspond in relative position to the recesses 19 and 20. Numeral 22 designates a movable joint member provided at one end thereof with a weight 23 and at the other end thereof with an engaging piece 24 and having its top surface near the weight 23 tapered.

The joint member 22 is fitted in the inside groove 21 in the boss 15 of each circular saw 3. Then the spindle 1 is inserted into the boss 15.

While the spindle 1 is rotating at a low speed or at a stop in this state, the inner periphery of the joint member 22 and the outer periphery of the spindle 1 extend in parallel to each other as shown in Fig. 11-I. Thus the circular saws 3 can be axially moved freely.

When the spindle 1 is rotated after the positioning of each saw 3, the circular saws 3 and the joint member 22 will rotate together with the spindle. The member 22 is slanted by the centrifugal force acting on the weight 23 as shown in Fig. 11-II, so that its portion formed with the engaging piece 24 is pressed at its inside against the spindle 1. Thus the circular saws 3 and the spindle 1 are coupled together.

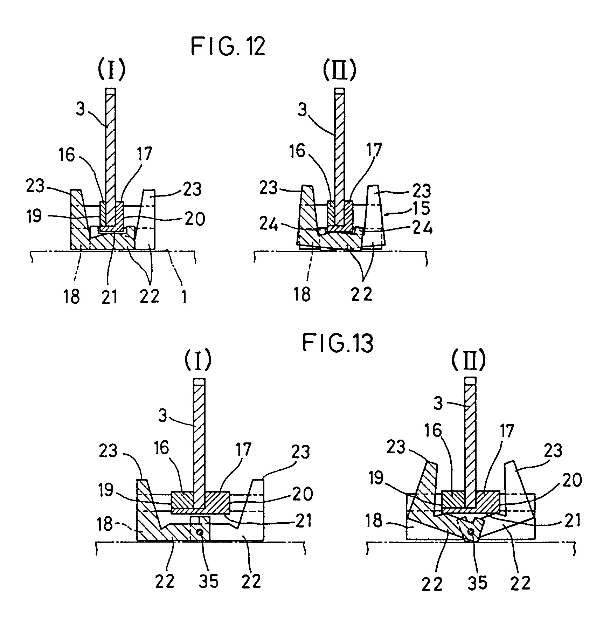

In the sixth embodiment shown in Figs. 12-I and 12-II, two joint members 22 of the same type as that of the fifth embodiment are provided in opposite ways to each other. They are the same in function as that of the fifth embodiment.

Namely, in the sixth embodiment, while the spindle 1 is at a stop or rotating at a low speed, the inner periphery of both the joint members 22 and the outer perihery of the spindle 1 are parallel to each other. Thus the circular saws 3 can be axially moved freely.

When the spindle 1 is rotated at a high speed after positioning the circular saws 3, the circular saws 3 and both the joint members 22 rotate together with the spindle. Also both joint members 22 are inclined as shown in Fig. 12-II by the action of the centrifugal force acting on the weights 23, so as to be pressed at their top surface against the bottom surface of the ring-shaped members 16 and 17 and at their bottom surface against the outer periphery of the spindle 1. Thus the circular saws 3 and the spindle 1 are coupled together.

In the seventh embodiment shown in Figs. 13-I and 13-II, each pair of joint members 22 of the sixth embodiment have their inner ends pivotally coupled together by means of a pin 35. In this case, the engaging pieces 24 as shown in Fig. 12 are not necessary.

In the seventh embodiment, as in the sixth embodiment, while the spindle 1 is rotating at a low speed or at a stop, the inner periphery of the joint members 22 and the outer periphery of the spindle 1 are parallel to each other. Thus the circular saws 3 can be axially moved freely,

When the spindle 1 is rotated at a high speed after positioning the circular saws 3, the circular saws 3 and the joint members 22 are rotated together with the spindle. The members 22 are inclined about the pin 35 as shown in Fig. 13-II by the action of centrifugal force acting on the weights 23, so as to be pressed at their top surface against the bottom surface of the ring-shaped members 16 and 17 and at their bottom surface against the outer periphery of the spindle 1. Thus the circular saws 3 and the spindle 1 are coupled together.

In the seventh embodiment, each pair of joint members 22 can be kept parallel to the spindle 1 by means of the pin 35.

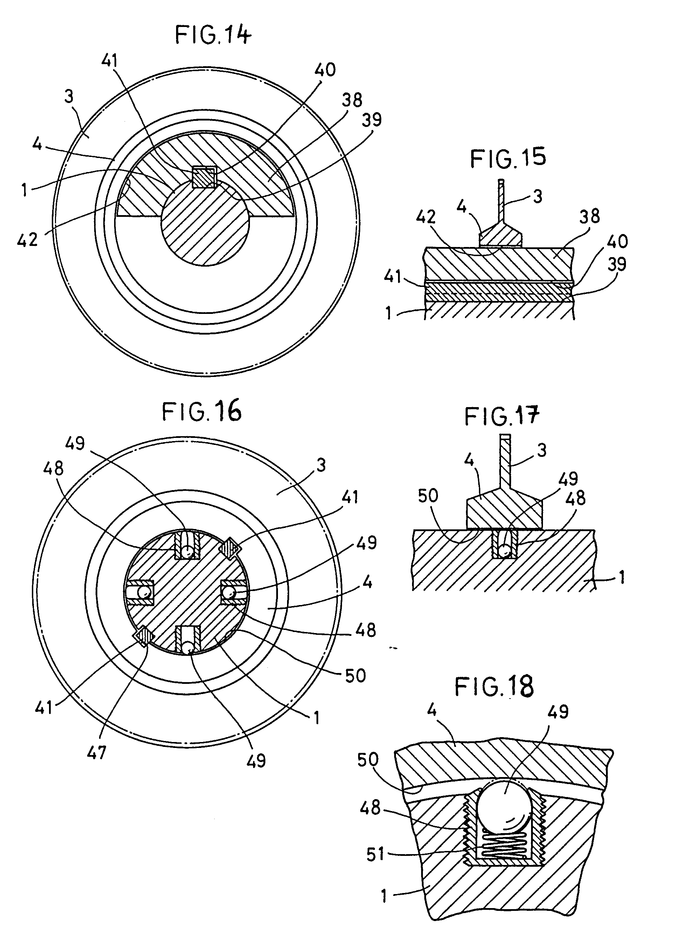

Figs. 14 and 15 show the ninth embodiment in which an axially elongated arcuate movable joint member 38 is fitted on the outside of the spindle 1. This member 38 and the spindle 1 are coupled together so as to rotate in unison by means of a slide key 41 loosely received in a key groove 39 formed in the spindle 1 and a groove 40 formed in the inner periphery of the member 38, so that an inner peripheral surface 42 of the boss 4 of each circular saw 3 can freely move along the outer periphery of the joint member 38.

In the ninth embodiment, while the spindle 1 is rotating at a low speed or at a stop, as shown in Fig. 16, a gap is formed between the outer periphery of the member 38 and the inner periphery 42 of the circular saws 3. Thus the circular saws 3 can freely move along the outer periphery of the members 38.

When the spindle 1 is rotated at a high speed after positioning the circular saws 3, the joint member 38 rotates together with the spindle. The member 38 moves outwardly by the action of a centrifugal force pressing its outer periphery against the inner periphery 42 of the boss 4 of each circular saw 3. Thus the circular saws 3 and the spindle 1 are coupled together through the member 38 so that the circular saws 3 can rotate together with the spindle 1.

In the ninth embodiment, if a single movable joint member 38 is provided at one side as shown in Fig. 14, it is necessary to provide a balance weight (not shown) at the other side. If there are provided two or more members 38, the balance weight can be omitted by providing the members 38 symmetrically or at angularly equal intervals.

In the tenth embodiment shown in Figs. 16 and 17, the spindle 1 is formed in its outer periphery with threaded holes arranged at suitable intervals. A threaded sheath 48 is screwed into each threaded hole and fixed in position. A ball-shaped joint member 49 is fitted in each threaded sheath 48 so as to be freely movable. Then the outer ends of the threaded sheaths 48 are bent inwards by caulking or the like to prevent the members 49 from slipping out of the sheaths but to allow part of the members 49 to protrude from the outer periphery of the spindle 1.

Also, as in the other embodiments, keys 41 mounted on the spindle 1 are slidably received in key grooves 47 formed inside the bosses 4.

In the tenth embodiment, while the spindle 1 is rotating at a low speed or at a stop, the members 49 are not pressed against the inner periphery 50 of the bosses 4. Thus the circular saws 3 are freely movable.

When the spindle 1 begins to rotate at a high speed, the members 49 are pressed against the inner peripheral surface 50 of each boss 4 by the action of a centrifugal force. Thus the circular saws 3 are coupled to the spindle 1.

In the tenth embodiment, as is apparent from Fig. 17, the adjustment of position is possible within the range till the members 49 touch the inner peripheral surface 50 of each boss 4.

The eleventh embodiment shown in Fig. 18 is the same as the tenth ebmodiment except that a coil spring 51 is fitted in each of the threaded sheaths 48 of the tenth embodiment so as not to pull in the members 49 excessively. Therefore we show only a portion which differs from the eleventh embodiment.

In this embodiment, as in the tenth embodiment, while the spindle 1 is rotating at a low speed or at a stop, the members 49 are in abutment with the springs 51 as shown by solid line. In this state, the position of the circular saws 3 is adjusted.

When the spindle 1 is rotated thereafter, the members 49 will protrude by the action of a centrifugal forces as shown by dotted line so as to be pressed against the inner peripheral surface 50. Thus the spindle 1 and the circular saws 3 are coupled together.

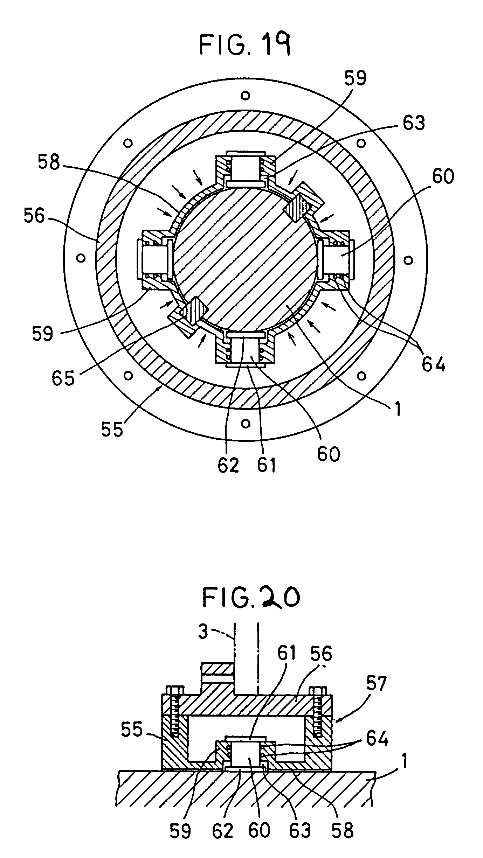

In the twelfth embodiment shown in Figs. 19 and 20, liquid is used.

In this embodiment, a plurality of hollow annular bodies 57 each comprising an annular member 55 having a cross-sectional shape of an outwardly opening and a lid 56 made of a rigid material and fixed to the outer periphery of the annular member 55 are mounted on the outer periphery of the spindle 1 through keys 65 so as to be slidable and to rotate together with the spindle 1. A circular saw 3 is fixedly mounted on the outer periphery of each lid 56.

Each annular member 55 has an elastically deformable inner peripheral wall 58 integrally formed at suitable locations thereof with a plurality of guide sheaths 59 protruding into the annular body 57. A movable member 60 is slidably mounted in each guide sheath 59. Flanges 61 and 62 are formed at both ends thereof to prevent them from coming out of the sheaths.

In the inner peripheral walls 58 are formed recesses 63 in which the flanges 62 are received. An O ring 64 is fitted on the inner periphery of each guide sheath 59 for liquid-tightness. The hollow annular bodies 57 are filled with a liquid such as hydraulic oil.

In the twelfth embodiment, while the spindle 1 is rotating at a low speed or at a stop, the inner periphery of each inner peripheral wall 58 is kept apart from the outer periphery of the spindle 1.

Thus the distances between the adjacent circular saws 3 can be adjusted freely.

When the spindle 1 is rotated at a high speed after adjusting the distances between the adjacent circular saws 3, the movable members 60 are moved outwardly by the action of a centrifugal force so as to protrude into the hollow annular bodies 57, thus increasing the fluid pressure in the annular bodies 57. Since the lids 56 are made of a rigid material and the inner peripheral walls 58 are elastically deformable, the fluid pressure will act on the inner surface of the inner peripheral walls 58 as shown by arrows in Fig. 19.

This will cause the inner peripheral walls 58 to be elastically deformed, pushing them toward the spindle 1 to press them against the outer peripheral surface of the spindle 1. Thus the circular saws 3 and the spindle 1 are coupled together.

## Claims

1. A sawing machine comprising a plurality of circular saws (3) mounted on a spindle (1) and adapted to rotate together therewith and to be individually adjustable in an axial direction thereon, and joint members (9) provided between said spindle (1) and said respective circular saws (3),
**characterized** in that
said joint members (9) are adapted to be actuated by centrifugal force when said spindle (1) and said circular saws (3) rotate at working speed, thereby coupling said spindle (1) and said circular saws (3) together in axially fixed positions.

2. A sawing machine as claimed in claim 1, wherein said joint members (9) are in the form of a single bar extending in the axial direction.

3. A sawing machine as claimed in claim 1, wherein said joint members (9) are disposed between an axial groove (7) formed in said spindle (1) and grooves (5, 8) formed in the inner peripheral surface of said circular saws, said movable joint members (9) being adapted to take such a position as to prevent the axial movement of said circular saws (3) under the influence of a centrifugal force when said spindle (1) rotates together with said circular saws (3).

4. A sawing machine as claimed in claim 1, wherein said joint members (9) are pivotally coupled to said respective circular saws (3) at a portion near the inner periphery thereof and adapted to be pressed against said spindle (1) by the action of a centrifugal force when said spindle (1) and said circular saws (3) rotate together, thereby preventing said circular saws (3) from moving axially.

5. A sawing machine as claimed in claim 1, wherein said joint members (9) are mounted so as to be radially movable but not axially movable, said joint members (9) being adapted to be pressed against said circular saws (3) under the influence of a centrifugal force when said spindle (1) rotates, thereby coupling said spindle (1) and said circular saws (3) together.

6. A sawing machine as claimed in claim 1, wherein said joint members (9) comprise liquid-filled hollow annular bodies (57) provided on the inner peripheral surface of said respective circular saws (3) and having an inner peripheral wall (58) formed with a plurality of guide sheaths (59), and movable members (60) each slidably mounted in said respective guide sheaths (59) so as to protrude into said hollow annular bodies (57) by the action of a centrifugal force while said circular saws (3) are in rotation, said inner peripheral walls being adapted to be elastically deformed when said movable members (60) protrude into said hollow annular bodies (57) by the action of a centrifugal force so as to be pressed against the outer periphery of said spindle (1) thereby coupling said spindle (1) and said circular saws (3) together.

## Patentansprüche

1. Sägemaschine mit einer Vielzahl von Kreissägen (3), die auf einer Welle (1) gelagert sind und gemeinsam mit dieser drehbar und in deren Längsrichtung einzeln verstellbar sind, und mit zwischen der Welle (1) und den einzelnen Kreissägen (3) vorgesehenen Kopplungselmenten (9),
dadurch **gekennzeichnet,**
daß die Kopplungselemente (9) so ausgebildet sind, daß sie durch Zentrifugalkraft betätigt werden, wenn die Welle (1) und die Kreissägen (1) mit Arbeitsgeschwindigkeit umlaufen, und dadurch die Welle (1) und die Kreissägen (3) in axial festgelegten Positionen koppeln.

2. Sägemaschine nach Anspruch 1,
bei der die Kopplungselemente (9) die Form einer einzigen, in Axialrichtung verlaufenden Leiste haben.

3. Sägemaschine nach Anspruch 1,
bei der die Kopplungselemente (9) zwischen einer in der Welle ausgebildeten axialen Nut (7) und in der inneren Umfangsfläche der Kreissägen ausgebildeten Nuten (5, 8) angeordnet sind, wobei die beweglichen Kopplungselemente (9) unter dem Einfluß der Zentrifugalkraft eine Position einnehmen, in der sie axiale Bewegung der Kreissägen (9) verhindern, wenn die Spindel (11) zusammen mit den Kreissägen (9) umläuft.

4. Sägemaschine nach Anspruch 1,
bei der die Kopplungselemente (9) schwenkbar mit den einzelnen Kreissägen (9) an einem Bereich nahe ihrem inneren Umfang gekuppelt sind und durch die Wirkung einer Zentrifugalkraft gegen die Welle (1) anpreßbar sind, wenn die Welle (1) und die Kreissägen (3) gemeinsam umlaufen, wodurch sie eine Axialbewegung der Kreissägen (3) verhindern.

5. Sägemaschine nach Anspruch 1,
bei der die Kopplungselemente (9) radial beweglich, aber axial unbeweglich gelagert sind, wobei die Kopplungselemente (9) unter dem Einfluß einer Zentrifugalkraft gegen die Kreissägen (3) anpreßbar sind, wenn die Spindel (1) umläuft, wodurch die Spindel (1) und die Kreissägen (3) miteinander gekoppelt werden.

6. Sägemaschine nach Anspruch 1,
bei der die Kopplungselemente (9) aus flüssigkeitsgefüllten, hohlen, ringförmigen Körpern (57), die an der inneren Umfangsfläche der jeweiligen Kreissägen (3) vorgesehen sind und eine innere Umfangswand (58) mit mehreren, daran ausgebildeten Führungsbuchsen (59) aufweisen, und aus beweglichen Elementen (60) bestehen, die jeweils in einer Führungsbuchse (59) derart verschiebbar gelagert sind, daß sie durch die Wirkung der Zentrifugalkraft in den hohlen ringsförmigen Körper (57) vorstehen, wenn die Kreissägen (3) in Rotation sind, wobei die inneren Umfangswände so ausgebildet sind, daß sie, wenn die beweglichen Elemente (60) durch die Schwerkraft in die hohlen ringsförmigen Körper (57) hineingedrückt werden, elastisch verformt und gegen den Außenumfang der Welle (1) angepreßt werden, wodurch die Spindel (1) und die Kreissägen (3) miteinander gekoppelt werden.

## Revendications

1. Machine de sciage comprenant une pluralité de scies circulaires (3) montées sur un arbre (1) et pouvant tourner avec celui-ci et être réglées individuellement dans une direction axiale sur cet arbre, et des pièces de liaison (9) prévues entre ledit arbre (1) et lesdites scies circulaires respectives (3), caractérisée en ce que lesdites pièces de liaison (9) sont agencées de manière à être actionnées par la force centrifuge lorsque ledit arbre (1) et lesdites scies circulaires (3) tournent à une vitesse de travail, afin d'accoupler ensemble ledit arbre (1) et lesdites scies circulaires (3) dans des positions axialement fixes.

2. Machine de sciage suivant la revendication 1, dans laquelle lesdites pièces de liaison (9) sont sous la forme d'une barre unique s'étendant dans la direction axiale.

3. Machine de sciage suivant la revendication 1, dans laquelle lesdites pièces de liaison (9) sont disposées entre une rainure axiale (7) formée dans ledit arbre (1) et des rainures (5,8) formées dans la surface périphérique desdites scies circulaires, lesdites pièces de liaison mobiles (9) pouvant prendre une position telle qu'elles empêchent le mouvement axial des dites scies circulaires (3) sous l'influence d'une force centrifuge lorsque ledit arbre (1) tourne avec lesdites scies circulaires (3).

4. Machine de sciage suivant la revendication 1, dans laquelle lesdites pièces de liaison (9) sont reliées de façon pivotante auxdites scies circulaires respectives (3) à un endroit proche de la périphérie intérieure de celles-ci et elles sont agencées pour exercer une pression contre ledit arbre (1) sous l'effet d'une force centrifuge lorsque ledit arbre (1) et lesdites scies circulaires (3) tournent ensemble, ce qui empêche lesdites scies circulaires (3) de se déplacer axialement.

5. Machine de sciage suivant la revendication 1, dans laquelle lesdites pièces de liaison (9) sont montées de manière à être radialement déplaçables mais non axialement déplaçables, lesdites pièces de liaison (9) étant disposées pour exercer une pression contre lesdites scies circulaires (3) sous l'influence d'une force centrifuge lorsque ledit arbre (1) tourne, afin d'accoupler ensemble ledit arbre (1) et lesdites scies circulaires (3).

6. Machine de sciage suivant la revendication 1, dans laquelle lesdites pièces de liaison (9) comprennent des corps annulaires creux remplis de liquide (57) prévus sur la surface périphérique intérieure desdites scies circulaires respectives (3) et ayant une paroi périphérique intérieure (58) pourvue d'une pluralité de manchons de guidage (59), et des éléments mobiles (60) montés chacun de façon coulissante dans lesdits manchons de guidage respectifs (59) de façon à faire saillie dans lesdits corps annulaires creux (57) sous l'effet d'une force centrifuge lorsque lesdites scies circulaires (3) tournent , lesdites parois périphériques intérieures se déformant élastiquement,lorsque lesdits éléments mobiles (60) font saillie dans lesdits corps annulaires creux (57) sous l'effet d'une force centrifuge, de façon à être pressées contre la périphérie extérieure dudit arbre (1) afin d'accoupler ensemble ledit arbre (1) et les dites scies circulaires (3).
